# EUROPÄISCHE PATENTSCHRIFT

(11) **EP 0 398 086 B1**
(45) Veröffentlichungstag und Bekanntmachung des Hinweises auf die Patenterteilung: **24.11.1993**
(21) Anmeldenummer: 90108423.6
(22) Anmeldetag: 04.05.1990
(51) Int. Cl.: F16L 27/10, F01N 7/18

(54) **Verbindung zweier Rohre einer Leitung für heisse Medien**
Connector for two pipes of a hot medium conduit
Raccordement pour deux tuyaux d'un conduit pour médium chaud

(30) Priorität: 16.05.1989 DE 3915838
(43) Veröffentlichungstag der Anmeldung: 22.11.1990
(73) Patentinhaber: Witzenmann GmbH Metallschlauch-Fabrik Pforzheim, D-75175 Pforzheim (DE)
(72) Erfinder: Gropp, Reinhard, Dipl.-Ing., D-7540 Neuenbürg-Arnbach (DE); Munz, Günter, D-7530 Pforzheim (DE); Quick, Klaus, Dipl.-Ing., D-7530 Pforzheim (DE)
(74) Vertreter: Lemcke, Rupert, Dipl.-Ing.

(56) Entgegenhaltungen:
- EP-A- 0 208 128
- EP-A- 0 250 901
- DE-A- 3 524 931
- DE-A- 3 526 481
- DE-A- 3 719 840
- DE-U- 8 632 790
- DE-U- 8 717 188
- GB-A- 2 125 502

## Beschreibung

Die Erfindung betrifft eine Verbindung zweier Rohre einer Leitung für heiße Medien, insbesondere Abgasleitung von Kraftfahrzeugen, wobei die aufeinander zu gerichteten Rohrenden einen sie miteinander verbindenden Ringraum wenigstens teilweise mit ausbilden, in welchem wenigstens ein als Ring ausgebildetes, aus temperatur- und korrosionsbeständigem Keramik- oder Metallmaterial in Form eines Faser- oder Drahtvlieses, -geflechtes, -gewebes, -gestrickes oder dergleichen gepreßtes Kissen mit gedämpft federnden Eigenschaften in Radial- und Axialrichtung gehalten angeordnet ist, über das die Rohrenden unter radialer und axialer Abstützung in Grenzen beweglich miteinander verbunden sind, wobei das Kissen durch wenigstens eine die Rohrenden dicht miteinander verbindende, kreisringförmige, sich im wesentlichen radial erstreckende Dichtmembranscheibe aus temperatur- und korrosionsbeständigem Material ergänzt ist, die im wesentlichen koaxial in gleicher Radiallage zum Kissen angeordnet ist und eine Profilierung in Form zueinander konzentrischer Wellen, Abstufungen oder Auswölbungen aufweist.

Verbindungen dieser Gattung sind durch die DE-A-37 19 840 bekannt. Dort ist die Dichtmembranscheibe unmittelbar an den Kissen durch diese abgestützt angeordnet. Dabei besteht die Profilierung der Dichtmembranscheibe aus einer Wellung oder Abstufung. Jedoch sind auch andere Profilierungen in Form von Auswölbungen der Membran oder dergleichen denkbar, die durch den nachfolgend beschriebenen Erfindungsgegenstand mit eingeschlossen sein sollen.

Durch die GB-A-2125502, die EP-A-0250901 bzw. die EP-A-0208128 sind Bauformen einer anderen Gattung bekannt, bei der zur dichten Verbindung immer Bälge vorgesehen sind, die entweder mit radialem Abstand oder mit großem axialen Abstand zum Kissen angeordnet sind. Dadurch ergibt sich im Gegensatz zur eingangs genannten Gattung eine geringere Lastspielzahl in Axialrichtung der Gelenkverbindung und eine höhere Baulänge, da Bälge ein mehrfaches der axialen Baulänge gegenüber Dichtmembranscheiben benötigen. Auch hat die Axialbeweglichkeit eines Balges Grenzen, da er nicht ohne bleibende Verformung über seine Blocklänge hinaus bewegt werden kann. Diese Problematik tritt bei Dichtmembranscheiben nicht auf.

Ferner haben Bälge verglichen mit Dichtmembranscheiben eine hohe Rückfederungsrate.

Bei der bewährten Konstruktion nach der eingangs genannten Gattung entsprechend der DE-A-37 19 840 kann jedoch eine gegenseitige Beeinträchtigung zwischen Kissen und Dichtmembranscheibe sowohl hinsichtlich deren jeweiliger Funktion als auch bezüglich der jeweiligen Lebensdauer nicht ausschließen.

Aufgabe der Erfindung ist es daher, eine Verbindung der eingangs genannten Art derart umzugestalten, daß zwischen Kissen und Dichtmembranscheibe im Sinne einer Standzeiterhöhung eine gegenseitige Beeinträchtigung nicht mehr möglich ist. Dabei soll die Umgestaltung mit einfachen Mitteln und unter möglichst weitgehender Beibehaltung der aus der bekannten Konstruktion vorhandenen Teile erfolgen.

Diese Aufgabe ist ausgehend von einer Verbindung der eingangs genannten Art erfindungsgemäß dadurch gelöst, daß die Dichtmembranscheibe mit axialem Abstand zum Kissen angeordnet ist.

Durch diese erfindungsgemäße Maßnahme ist eine strikte Trennung zwischen Kissen einerseits und Membranscheibe andererseits erreicht, sowohl in räumlicher als auch in funktioneller Hinsicht, indem nunmehr ohne gegenseitige Einflußmöglichkeit das Kissen ausschließlich die Funktion der gegenseitigen axialen und radialen Aufhängung und Abstützung der so miteinander verbundenen Rohre ausübt, während die Dichtmembranscheibe allein die Aufgabe einer vollkommen dichten Gestaltung der Verbindung der beiden Leitungsrohre hat.

Damit ist mangels gegenseitiger Beeinträchtigungsmöglichkeit zwischen Kissen und Dichtmembranscheibe eine bedeutende Standzeiterhöhung der insgesamten Rohrverbindung erreichbar. Ferner läßt sich das Kissen einfacher und in seinen Abmessungen kleiner gestalten, da es insbesondere bezüglich seiner radialen Abmessung nicht mehr von der entsprechenden Radialabmessung der Dichtmembranscheibe abhängig ist, und schließlich lassen sich trotzdem insbesondere für die Lagerung und Anordnung des Kissens die Konstruktions- bzw. Bauteile teilweise weiterverwenden, die bereits im bekannten Falle angewendet wurden.

Nach einer Ausführungsform der Erfindung hat es sich als zweckmäßig erwiesen, daß die Dichtmembranscheibe auf der dem Rohrinneren zugewandten Seite des Kissens angeordnet ist. Auf diese Weise ist einmal die Dichtmembranscheibe durch das Kissen gegenüber äußeren, insbesondere mechanischen Beeinflussungen geschützt und es ist zum anderen das Kissen durch die Dichtmembranscheibe gegen innere, insbesondere korrodierende Einflüsse aus dem in der Leitung geführten Medium abgekapselt.

Von diesem Prinzip ausgehend kann es vorteilhaft sein, daß die Dichtmembranscheibe mit den den Ringraum bildenden Rohrteilen verschweißt ist, wobei durch die räumliche Befreiung der Dichtmembranscheibe von der Anordnung des Kissens für die Dimensionierung der Dichtmembranscheibe und die Stellen ihren Festlegungen sowohl an der Außenwand als auch an der inneren Wandung des Ringraumes weitestgehend Freiheit erhalten ist im Hinblick auf eine optimale Gestaltung der Dichtmembranscheibe im Hinblick auf die auf diese durch die Relativbewegungen zwischen Außen- und Innenwand des Ringraumes übertragenen Bewegungsgrößen.

Mit gleichem Vorteil kann ausgehend von diesem Prinzip vorgesehen sein, daß die Dichtmembran aus zwei axial nebeneinander angeordneten, kreisringförmigen Membranscheiben besteht und daß die Membranscheiben entlang ihrem Außenumfang dicht miteinander verschweißt sowie mit ihrem Innenumfang je mit dem benachbarten Rohrende dicht verbunden, zweckmäßiger Weise verschweißt sind.

Hier kann die Verbindung der Membranscheiben mit den Rohrenden über von den Rohrenden ausgehende, mit diesen fest und dicht verbundene Stege in Form kurzer Rohrstücke gegeben sein.

Durch die vorstehend beschriebene Ausführungsform ist bezüglich der Dichtmembran insbesondere die Belastung durch die Relativbewegung der miteinander verbundenen Rohre auf zwei entlang ihrem Außenumfang miteinander verbundene Membranscheiben aufgeteilt, so daß in einer nur wenig Platz beanspruchenden Weise eine verhältnismäßig große Beweglichkeit zwischen den miteinander verbundenen Rohren erreicht ist, wobei sich die insbesondere in Radialrichtung ergebende Möglichkeit einer Platzersparnis gleichermaßen auch günstig auf eine entsprechend kleinere Ausbildung des Kissens auswirkt.

Bei den vorgenannten Ausführungsformen kann zusätzlich auf der dem Rohrinneren zugewandten Seite der Dichtmembranscheibe ein weiteres Kissen angeordnet sein. Dadurch ergibt sich der Vorteil, daß die Dichtmembranscheibe bzw. deren Radialebene durch den Drehmittelpunkt der durch die Kissen gebildeten, gelenkigen Rohrverbindung geht, wobei dies gleichermaßen auch für zwei nebeneinander angeordnete, kreisringförmige Membranscheiben in soweit zutrifft, als deren radiale, mittlere Symmetrieebene durch den genannten Drehmittelpunkt geht. Auf diese Weise ist die von der Dichtmembranscheibe aufzunehmende radiale Bewegungsgröße auf ein Minimum reduziert.

Bezüglich der vorstehend genannten, aus zwei nebeneinander angeordneten, kreisringförmigen Membranscheiben bestehenden Konstruktion kann es auch zweckmäßig sein, daß der Ringraum durch eine die Rohrenden mit radialem Abstand im wesentlichen achsparallel umgebende und überbrückende Schale aus temperatur- und korrosionsbeständigem Material außen abgeschlossen bzw. gebildet ist, daß auf beiden Seiten der Dichtmembran ein Kissen mit axialem Abstand angeordnet ist und daß die Kissen am Außenumfang durch die Schale und am Innenumfang je durch eines der Rohrenden in Axial- und Radialrichtung gehalten sind.

Ausgehend von dem Prinzip einer Anordnung der Dichtmembranscheibe auf der dem Rohrinneren zugewandten Seite des Kissens kann eine andere Lösung nach der Erfindung darin bestehen, daß die Dichtmembranscheibe aus einer kreisringförmigen Membranscheibe besteht, deren Innenumfang gegebenenfalls unter Zwischenschaltung einer zylindrischen Hülse mit einem der Rohrenden dicht verschweißt ist, daß sich an den Außenumfang der Membranscheibe damit dicht verbunden in Richtung auf das andere Rohrende wenigstens eine weitere ebene, sich im wesentlichen radial erstreckende, ringförmige Dichtmembranscheibe anschließt, und daß diese weitere Membranscheibe zwischen einer mit dem anderen Rohrende verbundenen, im wesentlichen radial verlaufenden Ringwandung und der dieser bezüglich der weiteren Membranscheibe gegenüberliegenden, vom anderen Rohrende ausgehenden, radialen Wandung des Ringraumes eingefangen ist.

Hier kann in weitere Ausbildung mit dem Außenumfang wenigstens ein Paar weiterer Dichtmembranscheiben verbunden sein und es kann zwischen diese von radial innen wenigstens eine zusätzliche, sich im wesentlichen radial erstreckende, ringförmige Dichtmembranscheibe eingreifen, die mit ihrem Innenumfang am anderen Rohrende dicht festgelegt ist.

Mit dieser Ausbildung ist die Dichtmembran mit einer durch die genannten ebenen Membranscheiben gebildeten Labyrinthdichtung kombiniert, wodurch sich innerhalb der durch die Dichtmembranscheiben gebildeten Baueinheit wiederum eine Aufteilung in axiale und radiale Belastungsgröße ergibt. Die axiale Belastungsgröße wird durch die Dichtmembranscheibe aufgenommen, während die ebene Ringscheibe bzw. die ebenen Ringscheiben, die die Labyrinthdichtung bilden, die radiale Bewegungsgröße durch Relativbewegung der miteinander in Eingriff befindlichen ebenen Dichtmembranscheiben aufnehmen.

Erfindungsgemäß kann der Spaltquerschnitt zwischen der weiteren Dichtmembranscheibe und gegebenenfalls der zusätzlichen Dichtmembranscheibe einerseits und axial angrenzenden Bauteilen andererseits wenigstens eine Erweiterung aufweisen, wodurch mittels Querschnittsänderung in an sich bekannter Weise eine Dichtwirkung erzielt ist.

Alternativ oder auch hinzutretend kann jedoch auch vorgesehen sein, daß die weitere Dichtmembranscheibe und gebenenfalls die zusätzliche Dichtmembranscheibe zwischen Ringwandung und Wandung axial verspannt sind.

Ausgehend von dem grundsätzlichen Erfindungsgedanken besteht ein weiterer Lösungsweg darin, daß die Dichtmembranscheibe auf der dem Rohrinneren abgewandten Seite des Kissens angeordnet ist. Dies führt zu einem besonders einfachen Aufbau insbesondere auch im Hinblick auf die Montage der Rohrverbindung, weil nunmehr für die Anbringung der Dichtmembranscheibe eine besonders gute Zugänglichkeit von außerhalb der Verbindung gegeben ist.

Auch hier kann wieder vorgesehen sein, daß die Dichtmembranscheibe mit den den Ringraum bildenden Rohrteilen, nunmehr aber auf deren Außenseite verschweißt ist.

Nach einer anderen Ausführungsform kann die Dichtmembranscheibe aus zwei gleichen axial nebeneinander angeordneten, sich im wesentlichen geneigt zur Rohrachse gegenläufig erstreckenden, kreisringförmigen Membranteilen bestehen, die entlang ihrem Außenumfang dicht miteinander verbunden sind und die den durch die Rohrenden gebildeten Ringraum radial außen überbrückend mit ihrem mit gleichem Durchmesser versehenen Innenumfang je mit einem der benachbarten Rohrenden dicht verbunden sind.

Bei einer solchen Konstruktion überbrückt also das Membranpaar den das Kissen enthaltenden Ringraum außen und ist jeweils mit dem Innenumfang einer der Dichtmembranscheiben mit einem der Rohrenden verbunden.

Damit ergibt sich eine Schutzfunktion für das Kissen, die andererseits jedoch eine entsprechend stabile Ausbildung der Dichtmembranscheibe bzw. der Dichtmembranscheiben voraussetzt, die - ohnehin bei allen hier diskutierten Ausführungsformen in der Regel aus Metall bestehend, zweckmäßigerweise eine größere, auch Stoßbelastungen standhaltende Wandstärke aufweist.

Vorteilhafterweise können bei der vorstehend geschilderten Ausführungsform die Membranteile außen unter Zwischenschaltung einer zylindrischen Hülse miteinander verbunden sein.

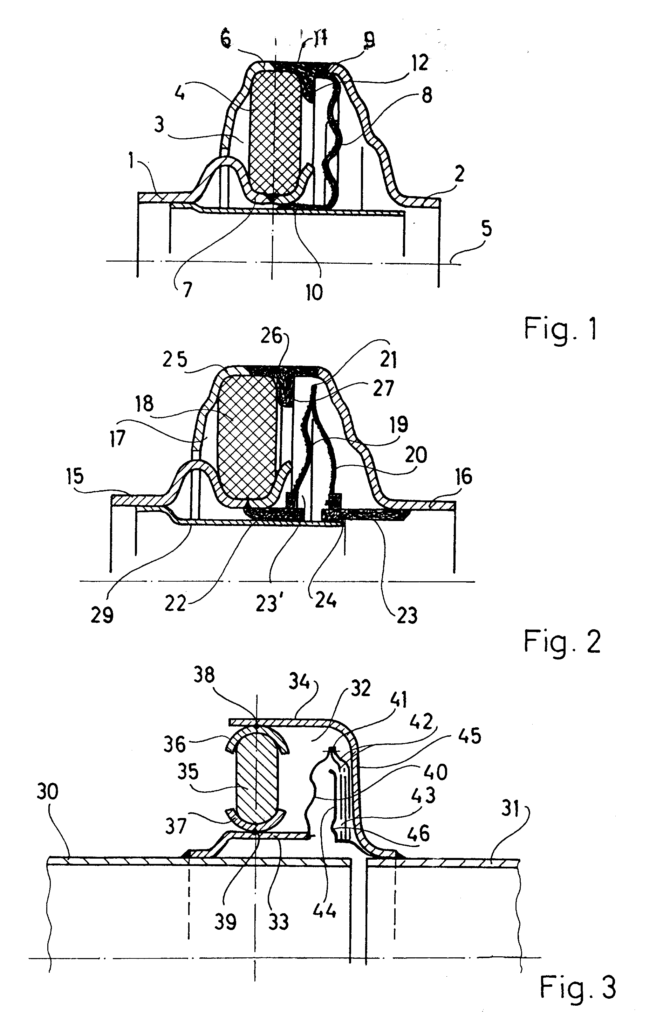

Weitere Einzelheiten der Erfindung ergeben sich aus der nachfolgenden Beschreibung von Ausführungsformen, die auf der Zeichnung in den Fig. 1 bis 7 dargestellt sind. Dabei zeigen die Figuren jeweils den axialen Halbschnitt einer Rohrverbindung.

Wie aus Fig. 1 ersichtlich, bilden die Enden zweier Rohre 1 und 2 bei entsprechender gegenseitiger Überlappung einen Ringraum 3, in welchem ein ringförmiges Kissen 4 eingesetzt und durch entsprechende Gestaltung der Enden der Rohre 1 und 2 radial und axial gehalten ist so, daß die Rohre 1 und 2 über das Kissen 4 in Axial- und Radialrichtung gelenkig gegeneinander abgestützt sind.

Hierzu bilden die Enden der Rohre 1 und 2 um die Rohrachse 5 umlaufende, wannenförmige Querschnitte 6 und 7, in denen das Kissen 4 mit seiner äußeren und inneren Umfangskontur in Axial- und Radialrichtung fest sitzt.

Zu dieser durch das Kissen 4 gegebenen gegenseitigen Abstützung der Rohre 1 und 2 tritt eine Abdichtung durch eine ringförmige Dichtmembranscheibe 8 aus Metall, die mit ihrem Außenumfang 9 an der den Ringraun 3 bildenden, durch das Ende des Rohres 2 dargestellten Außenwand angeschweißt ist, während sie mit ihrem im vorliegenden Falle axial auslaufenden Innenumfang 10 an der durch das Rohr 1 gebildeten, wannenförmigen Kontur 7 angeschweißt ist.

Auf diese Weise sind die Rohre 1 und 2 über das Kissen 4 gelenkig gegeneinander abgestützt, und es ist zum anderen mittels der Dichtmembranscheibe 8 eine absolute Abdichtung des in der durch die Rohre 1 und 2 gebildeten Leitung geführten Mediums gegenüber der Umgebung gewährleistet. Dabei kann infolge der gegenseitigen Bewegung der Rohre 1 und 2 keine Beeinträchtigung zwischen Dichtmembranscheibe 8 und Kissen 4 stattfinden, da diese im axialen Abstand und damit ohne gegenseitige Berührung zueinander angeordnet sind.

Wie aus Fig. 1 ersichtlich, ist zur präziseren Gestaltung der Abstützungs- und Verbindungsstelle zwischen Außenwand des Ringraumes 3 und Kissen 4 einerseits sowie Dichtmembranscheibe 8 andererseits in die Außenwandung des Ringraumes 3 ein Ring 11 mit einem nach radial innen ragenden Steg 12 eingeschweißt, der auf der einen Seite das Kissen 4 axial abstützt und auf der anderen Seite zum Anschweißen des Außenumfanges der Dichtmembranscheibe 8 genügend Material bietet.

Bei der Ausführungsform gemäß Fig. 1 kann je nach Größe der relativen Axial- und Radialbewegungen der miteinander verbundenen Rohre 1 und 2 für die Dichtmembranscheibe 8 aufzunehmende Bewegungsgröße auftreten, die auf der Grundlage der zur Verfügung stehenden Platzverhältnisse und der dadurch bedingten Dimensionierung der Dichtmembranscheibe 8 nur schlecht zu bewältigen ist.

Um in solchen Fällen Abhilfe zu schaffen, kann die Ausbildungsform gemäß Fig. 2 Verwendung finden. Auch hier bilden wieder Rohre 15 und 16 mit ihren freien Enden einen Ringraum 17, in dem ein kreisringförmig ausgebildetes Kissen 18 axial und radial gefaßt ist und dadurch die Rohre 15 und 16 in Axial- und Radialrichtung gelenkig gegeneinander abstützt.

Die Abdichtung des Rohrinnenraumes gegenüber dem Kissen 18 erfolgt nun über eine Dichtmembran aus zwei axial nebeneinander angeordneten, kreisringförmigen Membranscheiben 19 und 20, die entlang ihrem Außenumfang bei 21 dicht miteinander verschweißt sind sowie mit ihrem Innenumfang je mit dem benachbarten Ende des Rohres 15 bzw. 16 dicht verbunden sind, wobei die Verbindung über von den Rohrenden ausgehende, mit diesen fest und dicht verbundene Stege 22 und 23 in Form kurzer Rohrstücke gegeben ist.

Auf diese Weise ist die auf die Dichtmembran ausgeübte Bewegungsgröße auf zwei Membranscheiben 19, 20 aufgeteilt, derart, daß sich durch die nahe beieinander liegenden Befestigungsstellen 23', 24 außerdem eine verhältnismäßig kleine Relativbewegung ergibt.

Wie auch im Falle der Fig. 1, ist hier in die von dem Rohr 16 ausgehende Außenwandung 25 des Ringraumes 17 ein Ring 26 eingesetzt, der über einen nach radial innen ragenden Steg 27 eine entsprechende Axialabstützung für das Kissen 18 bildet.

Den Ausführungsformen gemäß Fig. 1 und 2 ist gemeinsam, daß jeweils die Dichtmembranscheibe 8 bzw. 19 und 20 eine konzentrisch umlaufende Profilierung in Form einer Wellung, Abstufung oder dergleichen aufweisen, um der Dichtmembran eine ausreichende Möglichkeit zur Bewegungsaufnahme insbesondere in Radialrichtung zu geben.

Außerdem gehen in beiden Ausführungsformen von den Rohren 1 bzw. 15 sogenannte Innenschutzrohre 28 bzw. 29 aus, die die Verbindungsstelle bzw. den durch die Rohrenden gebildeten Ringraum innen überdecken und dadurch zusätzlich vor Einflüssen aus dem Medium schützen, daß in der durch die Rohre 1 und 2 bzw. 15 und 16 gebildeten Leitung geführt ist.

Fig. 3 zeigt eine Ausführungsform, die eine Abwandlung der Ausführungsform gemäß Fig. 2 darstellt. Hier ist ausgehend von Rohren 30, 31 ein Ringraum 32 durch an die Rohre 30, 31 angeschweißten, zylindrische Hülsen 33, 34 gebildet, in den ein Kissen 35 mit Hilfe von Halteringen 36 und 37 eingesetzt ist, die das Kissen entlang seinem äußeren und inneren Umfang umfassen und jeweils mit ihrem Scheitel 38, 39 mit der Wandung der Hülse 33 bzw. 34 verschweißt sind.

Neben dem Kissen 35 ist mit der Hülse 33 eine kreisringförmige Dichtmembranscheibe 40 entlang ihrem Innenumfang beispielsweise durch Schweißen fest verbunden, an deren Außenumfang sich bei 41 ein Paar von ebenen, im wesentlichen radial nach innen gerichteten Dichtmembranscheiben 42 anschließt, zwischen die von radial innen eine ebene Dichtmembranscheibe 43 ragt, die mit ihrem Innenumfang am Rohrende 31 festgelegt ist. Die so ineinandergreifenden Dichtmembranscheiben 42, 43 sind axial gegeneinander verspannt durch eine mit dem Rohrende 31 verbundene Erweiterung 46, die federnd in Axialrichtung über das durch die Membranscheiben 42, 43 gebildete Paket gegen die Radialwandung 45 drückt, über die die Hülse 34 am Rohr 31 befestigt ist.

Durch diese Ausbildung ist die Dichtmembranscheibe 40 zu einem wesentlichen Teil von den radialbewegungsbedingten Belastungen befreit, die sich aus dem gegenseitigen Seitenversatz der Rohre 30 und 31 ergeben. Denn nunmehr kann eine solche Bewegung durch radiale Relativverschiebung zwischen den Dichtmembranscheiben 42 und 43 aufgenommen werden, wobei die Dichtmembranscheibe 40 nur noch einer verhältnismäßig geringen Biegebewegung unterliegt, wobei sie auch eine gewisse torsionale Bewegungsaufnahme erlaubt.

Außerdem liefert die Schachtelung von Dichtmembranscheiben 42, 43 und Wandungen 44, 45 eine Labyrinthdichtung, deren Wirkung noch durch eine Erweiterung 46 der Ringwandung 44 vergrößert werden kann.

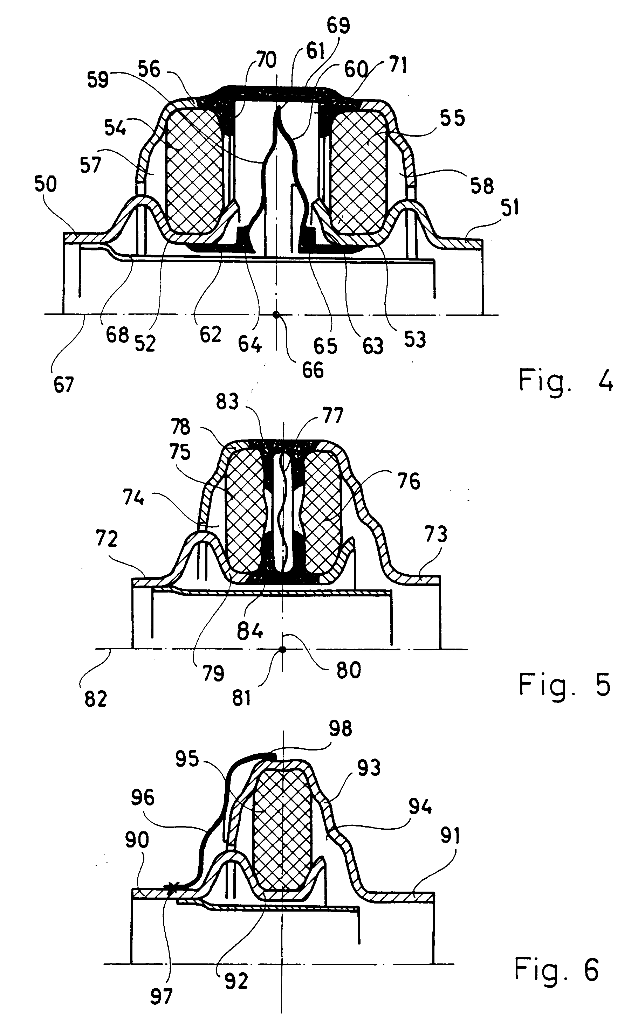

Ausgehend von der Ausführungsform gemäß Fig. 2 kann sich als weiteres Problem ergeben, daß verursacht durch die über das Kissen 17 gegebene gelenkige Verbindung der Rohre 15 und 16 die aus den Membranscheiben 19 und 20 gebildete Einheit immenoch einer unerwünschten Bewegungsgröße in Radialrichtung unterworfen ist. Um dem weiter zubegegnen, kann gemäß Fig. 4 der Aufbau der Rohrverbindung folgendermaßen gestaltet sein:
Gemäß Fig. 4 sind die aufeinander zugerichteten Rohre 50, 51 am Ende in gleicherweise wie das Rohr 15 gemäß Fig. 2 mit einem ringförmig umlaufenden, wannenförmigen Querschnitt 52, 53 ausgestattet, wobei in jedem dieser Querschnitte ein Dichtring 54, 55 gehalten ist.

Die äußere Halterung der Dichtringe 54, 55 in Radial- und Axialrichtung geschieht über eine die Rohrenden 52, 53 mit radialem Abstand umgebende und überbrückende Schale 56, die gleichzeitig bezüglich der Enden der Rohre 50 und 51 je einen Ringraum 57, 58 der bereits beschriebenen Art bildet.

Die Enden der Rohre 50, 51 bzw. die daran endständig angeschlossenen Ringprofile 52, 53 dicht miteinander verbindend ist wiederum ähnlich wie in Fig. 2 eine Dichtmembran aus zwei axial nebeneinander angeordneten, kreisringförmigen Membranscheiben 59, 60 vorgesehen, die entlang ihrem Außenumfang bei 61 dicht miteinander verschweißt sind sowie mit ihrem Innenumfang je mit dem benachbarten Rohrende dicht verbunden sind über von den Rohrenden ausgehende, mit diesen fest und dicht verbundene Stege 62, 63 in Form kurzer Rohrstücke, mit deren freien Enden die Membranscheiben 59, 60 entlang ihrer Innenkante bei 64, 65 verschweißt sind.

Auf diese Weise ist eine gelenkige Rohrverbindung geschaffen bei der über die Anordnung der Dichtmembranscheiben 59, 60 zwischen den Kissen 54, 55 die Mittelachse 66 der Membranscheibenanordnung den Drehpunkt 67 der durch die Kissen 54, 55 geschaffenen Gelenkverbindung der Rohre 50, 51 auf der Rohrachse 67 schneidet.

Auch im Falle dieser Ausführungsform ist der Bereich der Gelenkverbindung auf der Innenseite wiederum durch ein Innenschutzrohr 68 abgedeckt, das vom Rohr 50 ausgeht. Ferner ist in die Schale 56 ein Ringstück 69 eingesetzt, daß durch nach radial innen ragende Stege 70, 71 die Axialabstützung für die Kissen 54, 55 darstellt und gleichzeitig eine gute äußere Schutzabdeckung für die Schweißverbindung 61 zwischen den Membranscheiben 59, 60 bildet.

Zum gleichen Zwecke einer möglichst geringen Radialbelastung der Dichtmembranscheibe sowie deren weitestgehend geschützte Anordnung ist gemäß Fig. 5 eine Bauform vorgesehen, die ausgehend von zwei Rohren 72, 73 einen Ringraum 74 in der bereits anhand der Figuren 1 und 2 beschriebenen Weise bildet, in welchem zwei Kissen 75, 76 nebeneinander angeordnet sind, die zwischen sich und mit gegenseitigem axialen Abstand eine Dichtmembranscheibe 77 aufnehmen, die entlang ihrem äußeren und inneren Umfang jeweils mit wannenförmigen Querschnitten 78 und 79 verschweißt ist. welche die Rohre 72 bzw. 73 an ihren Enden bilden.

Auch hier schneidet die mittlere Radialebene 80 der Dichtmembranscheibe 77 den Drehpunkt 81, den die durch die Kissen 75 und 76 gebildete gelenkige Verbindung der Rohre 72 und 73 mit der Rohrachse 82 bildet, so daß die Dichtmembranscheibe 77 im wesentlichen keiner Radialbelastung unterliegt, sondern nur in Axialrichtung zwischen ihrem äußeren und inneren Umfang verschwenkt wird.

Zur besseren Befestigung der Dichtmembranscheibe 77 sowie deren geschützter Anordnung sind hier ebenfalls innerhalb der äußeren und inneren wannenförmigen Querschnitte 78 und 79 Ringstücke 83 und 84 eingeschweißt, die mit nach radial innen gehenden, hier nicht weiter bezifferten Stegen die Kissen 75 und 76 axial abstützen und jeweils zwischen äußeren und inneren Stegen in Axialrichtung einen Freiraum für die ungehinderte Bewegung der Dichtmembranscheibe 77 schaffen sowie gleichzeitig genügend Material zur äußeren und inneren Befestigung der Dichtmembranscheibe 77 mittels anschweißen bieten.

Bei den anhand der Fig. 1 bis 5 beschriebenen Beispielen ist jeweils die Dichtmembran im wesentlichen auf der dem Leitungsinneren zugewandten Seite der Kissen angeordnet.

Fig. 6 zeigt nun ein Beispiel, gemäß dem wiederum zwei Rohre 90, 91 durch entsprechende, enständige wannenförmige Querschnitte 92, 93 einen Ringraum 94 bilden, in dem ein ringförmiges Kissen 95 radial und axial gehalten eingesetzt ist, so, daß über das Kissen 95 die Rohre 90, 91 in Axial- und Radialrichtung gelenkig gegeneinander abgestützt sind.

Zur Abdichtung dieser Verbindung zwischen den Rohren 90 und 91 ist auf der bezüglich dem Inneren der Rohre abgewandten Seite des Kissens 95 eine Dichtmembranscheibe 96 angeordnet, die nunmehr jeweils mit ihrem äußeren und inneren Umfang auf der Außenseite des Rohres 90 einerseits bei 97 und des mit dem Rohr 91 verbundenen wannenförmigen Profils bei 98 andererseits durch Schweißen dicht verbunden ist.

Diese sehr einfache Bauform bietet den Vorteil einer besonders leichten Herstellbarkeit, in dem die kreisringförmige Dichtmembranscheibe 96 sehr einfach von außen aufgesetzt und angeschweißt werden kann, nachdem die beiden Rohre 90, 91 gelenkig über das Kissen 95 miteinander verbunden worden sind.

Andererseits ist nunmehr die Dichtmembranscheibe 96 äußeren Einflüssen ausgesetzt, so daß sie neben der üblichen Ausbildung aus Metall auch eine größere Wandstärke aufweisen sollte, als dies bei den Ausführungsformen gemäß den Fig. 1 bis 5 der Fall ist. Damit kann dann die Dichtmembranscheibe 96 gleichzeitig einen wirksamen Schutz für den Dichtring 95 gegen äußere mechanische Beeinflußung sowie korrosive Beeinträchtigung und Verschmutzung darstellen kann, was bei den früher beschriebenen Ausführungsformen zugunsten eines bevorzugten Schutzes der Dichtmembran nicht möglich war.

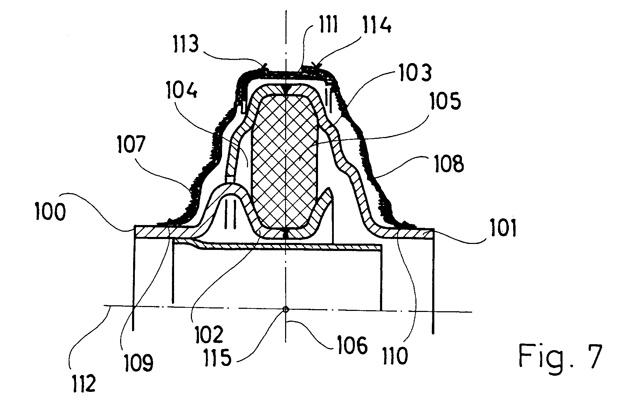

Eine Variation bzw. Ergänzung der AuSführungsform gemäß Fig. 6 ist in Fig. 7 dargestellt, gemäß der die beiden Rohre 100, 101 wiederum über endständige, wannenförmige Profile 102, 103 einen Ringraum 104 bilden, in dem ein ringförmiges Kissen 105 radial und axial abgestützt angeordnet ist und dadurch die beiden Rohre 100, 101 in axial und radial gegeneinander gesicherter Weise gelenkig miteinander verbindet.

Die so geschaffene Verbindungsstelle ist quasi außen abgedeckt durch zwei bezüglich der Symmetrieachse 106 spiegelbildlich angeordnete Dichtmembranscheiben 107 und 108, die jeweils mit ihrem Innenumfang am Rohr 100 bzw. 101 bei 109 bzw. 110 angeschweißt sind, während sie mit ihrem Außenumfang mit einem rohrförmigen Verbindungsstück 111 verschweißt sind, das sich koaxial zur Rohrachse 112 außerhalb des wannenförmigen Profils 103 erstreckt. Die Schweißverbindungen der Dichtmembranscheiben 107 und 108 mit dem rohrförmigen Verbindungsstück 111 sind mit den Ziffern 113 und 114 versehen.

Damit ist auch hier wieder eine Verbindung geschaffen, bei der die Dichtmembranscheiben 107, 108 eine Symmetrieebene 106 aufweisen, die durch den Schwenkpunkt 115 geht, den die Rohrverbindung durch die Anordnung des Kissens 105 mit der Rohrachse 112 bildet.

## Patentansprüche

1. Verbindung zweier Rohre (1, 2, 15, 16, 30, 31, 50, 51, 72, 73, 90, 91, 100, 101) einer Leitung für heiße Medien, insbesondere Abgasleitungen von Kraftfahrzeugen, wobei die aufeinander zu gerichteten Rohrenden einen sie miteinander verbindenden Ringraum (3, 17, 32, 57, 58, 74, 94, 104) wenigstens teilweise mit ausbilden, in welchem wenigstens ein als Ring ausgebildetes, aus temperatur- und korosionsbeständigem Keramik- oder Metallmaterial in Form eines Faser- oder Drahtvlieses, -geflechtes, -gewebes, -gestrickes oder dergleichen gepreßtes Kissen (4, 18, 35, 54, 55, 75, 76, 95, 105) mit gedämpft federnden Eigenschaften in Radial- und Axialrichtung gehalten angeordnet ist, über das die Rohrenden unter radialer und axialer Abstützung in Grenzen beweglich miteinander verbunden sind, wobei das Kissen (4, 18, 35, 54, 55, 75, 76, 95, 105) durch wenigstens eine die Rohrenden dicht miteinander verbindende, kreisringförmige, sich im wesentlichen radial erstreckende DichtMembranscheibe (8, 19, 20, 40, 59, 60, 77, 96, 107, 108) aus temperatur- und korrosionsbeständigem Material ergänzt ist, die im wesentlichen koaxial in gleicher Radiallage zum Kissen (4, 18, 35, 54, 55, 75, 76, 95, 105) angeordnet ist und eine Profilierung in Form zueinander konzentrischer Wellen, Abstufungen oder Auswölbungen aufweist,
dadurch gekennzeichnet,
daß die Dichtmembranscheibe (8, 19, 20, 40, 59, 60, 77, 96, 107, 108) mit axialem Abstand zum Kissen (4, 18, 35, 54, 55, 75, 76, 95, 105) angeordnet ist.

2. Verbindung nach Anspruch 1,
dadurch gekennzeichnet,
daß die Dichtmembranscheibe (8, 19, 20, 40, 59, 60, 77) auf der dem Rohrinneren zugewandten Seite des Kissens (4, 18, 35, 44, 55, 75, 76) angeordnet ist.

3. Verbindung nach Anspruch 2,
dadurch gekennzeichnet
daß die Dichtmembranscheibe (8, 77) mit den den Ringraum (3, 74) bildenden Rohrteilen (6, 7; 78, 79) verschweißt ist.

4. Verbindung nach Anspruch 2,
dadurch gekennzeichnet,
daß die Dichtmembran aus zwei axial nebeneinander angeordneten, kreisringförmigen Membranscheiben (19, 20, 59, 60) besteht, und daß die Membranscheiben entlang ihrem Außenumfang (21, 61) dicht miteinander verschweißt sowie mit ihren Innenumfang je mit dem benachbarten Rohrende dicht (23, 24; 64, 65) verbunden ist.

5. Verbindung nach Anspruch 4,
dadurch gekennzeichnet,
daß die Verbindung der Membranscheiben (19, 20, 59, 60) mit den Rohrenden (15, 16, 52, 53) über von den Rohrenden ausgehende, mit diesen fest und dicht verbundene Stege (22, 23, 62, 63) in Form kurzer Rohrstücke gegeben ist.

6. Verbindung nach einem der vorhergehenden Ansprüche,
dadurch gekennzeichnet,
daß auf der dem Rohrinneren zugewandten Seite der Dichtmembran (77) ein weiteres Kissen (76) angeordnet ist.

7. Verbindung nach Anspruch 4 oder 5,
dadurch gekennzeichnet,
daß der Ringraum (57) durch eine die Rohrenden (52, 53) mit radialem Abstand im wesentlichen achsparallel umgebende und überbrückende Schale (56) aus temperatur- und korrosionsbeständigem Material außen abgeschlossen bzw. gebildet ist, daß auf beiden Seiten der Dichtmembran (59, 60) ein Kissen (54, 55) mit axialem Abstand angeordnet ist und daß die Kissen am Außenumfang durch die Schale und am Innenumfang je durch eines der Rohrenden in Axial- und Radialrichtung gehalten sind.

8. Verbindung nach Anspruch 2,
dadurch gekennzeichnet,
daß die Dichtmembranscheibe (40) aus einer kreisringförmigen Membranscheibe besteht, deren Innenumfang gegebenenfalls unter Zwischenschaltung einer zylindrischen Hülse (33) mit einem der Rohrenden (30) dicht verschweißt ist, daß sich an den Außenumfang der Membranscheibe damit dicht verbunden in Richtung auf das andere Rohrende (31) wenigstens eine weitere, ebene, sich im wesentlichen radial erstreckende, ringförmige Dichtmembranscheibe (42) anschließt, und daß diese weitere Dichtmembranscheibe zwischen einer mit dem anderen Rohrende (31) verbundenen, im wesentlichen radial verlaufenden Ringwandung (44) und der dieser bezüglich der weiteren Dichtmembranscheibe gegenüberliegenden, vom anderen Rohrende (31) ausgehenden, radialen Wandung (45) des Ringraumes (32) eingefangen ist.

9. Verbindung nach Anspruch 8,
dadurch gekennzeichnet,
daß mit dem Außenumfang wenigstens ein Paar weiterer Dichtmembranscheiben (42) verbunden ist, und daß zwischen diese von radial innen wenigstens eine zusätzliche, sich im wesentlichen radial erstreckende, ringförmige Dichtmembranscheibe (43) eingreift, die mit ihrem Innenumfang am anderen Rohrende (31) dicht festgelegt ist.

10. Verbindung nach Anspruch 8 oder 9,
dadurch gekennzeichnet,
daß der Spaltquerschnitt zwischen weiterer Dichtmembranscheibe (42) und ggf. zusätzlicher Dichtmembranscheibe (43) einerseits und axial angrenzenden Bauteilen (Ringwandung 44, Wandung 45) andererseits wenigstens eine Erweiterung (46) aufweist.

11. Verbindung nach einem der Ansprüche 8 bis 10,
dadurch gekennzeichnet, daß die weitere Dichtmembranscheibe und ggf. die zusätzliche Dichtmembranscheibe zwischen Ringwandung (44) und Wandung (45) axial verspannt sind.

12. Verbindung nach Anspruch 1,
dadurch gekennzeichnet,
daß die Dichtmembranscheibe (96, 107, 108) auf der dem Rohrinneren abgewandten Seite des Kissens (95, 105) angeordnet ist.

13. Verbindung nach Anspruch 12,
dadurch gekennzeichnet,
daß die Dichtmembranscheibe (96) mit den den Ringraum (94) bildenden Rohrteilen (92, 93) auf deren Außenseite verschweißt (97, 98) ist.

14. Verbindung nach Anspruch 12 und 13,
dadurch gekennzeichnet,
daß die Dichtmembranscheibe aus zwei gleichen, axial nebeneinander angeordneten, sich im wesentlichen geneigt zur Rohrachse (112) gegenläufig erstreckenden, kreisringförmigen Membranteilen (107, 108) besteht, daß die Membranteile entlang ihrem Außenumfang dicht miteinander verbunden sind und daß die Membranteile den durch die Rohrenden gebildeten Ringraum (104) radial außen überbrückende mit ihrem mit gleichem Durchmesser versehenen Innenumfang je mit einem der benachbarten Rohrenden (100, 101) dicht verbunden sind.

15. Verbindung nach Anspruch 14,
dadurch gekennzeichnet,
daß die Membranteile (107, 108) außen unter Zwischenschaltung einer zylindrischen Hülse (111) miteinander verbunden sind.

## Claims

1. Connection of two pipes (1, 2, 15, 16, 30, 31, 50, 51, 72, 73, 90, 91, 100, 101) of a duct for hot media, especially exhaust ducts of motor vehicles, the pipe ends, which are directed towards one another, also forming, at least partially, an annular space (3, 17, 32, 57, 58, 74, 94, 104) which connects them to one another and in which is arranged at least one cushion (4, 18, 35, 54, 55, 75, 76, 95, 105) which is constructed as a ring, is compressed from temperature- and corrosion-resistant ceramic or metallic material in the form of a fibre or wire fleece, braid, cloth, knitted mesh or the like, has damped resilient properties, is held in the radial and axial direction and by means of which the pipe ends are connected to one another with radial and axial support to be movable to a limited extent, the cushion (4, 18, 35, 54, 55, 75, 76, 95, 105) being supplemented by at least one annular substantially radially extending sealing diaphragm plate (8, 19, 20, 40, 59, 60, 77, 96, 107, 108) of temperature- and corrosion-resistant material which connects the pipe ends to one another in sealing manner, is arranged substantially coaxially in the same radial position with respect to the cushion (4, 18, 35, 54, 55, 75, 76, 95, 105) and has a profile in the form of corrugations, stepped portions or arched portions which are concentric with respect to one another,
characterised in that
the sealing diaphragm plate (8, 19, 20, 40, 59, 60, 77, 96, 107, 108) is arranged at an axial distance from the cushion (4, 18, 35, 54, 55, 75, 76, 95, 105).

2. Connection according to claim 1,
characterised in that
the sealing diaphragm plate (8, 19, 20, 40, 59, 60, 77) is arranged on the side of the cushion (4, 18, 35, 44, 55, 75, 76) that faces the inside of the pipes.

3. Connection according to claim 2,
characterised in that
the sealing diaphragm plate (8, 77) is welded to the pipe parts (6, 7; 78, 79) forming the annular space (3, 74).

4. Connection according to claim 2,
characterised in that
the sealing diaphragm comprises two annular diaphragm plates (19, 20, 59, 60) arranged axially next to one another, and that the diaphragm plates are welded to one another in sealing manner along their external circumference (21, 61) and are each connected in sealing manner by way of their internal circumference to the respective adjacent pipe end (23, 24; 64, 65).

5. Connection according to claim 4,
characterised in that
the connection of the diaphragm plates (19, 20, 59, 60) to the pipe ends (15, 16, 52, 53) is effected by means of webs (22, 23, 62, 63) in the form of short pipe pieces, which webs extend from the pipe ends and are connected thereto in a secure and sealing manner.

6. Connection according to any one of the preceding claims,
characterised in that
a further cushion (76) is arranged on the side of the sealing diaphragm (77) that faces the inside of the pipes.

7. Connection according to claim 4 or claim 5,
characterised in that
the annular space (57) is closed at the outside, or formed, by a shell (56) of temperature- and corrosion-resistant material which surrounds and bridges the pipe ends (52, 53) at a radial distance therefrom and so that the axes are substantially parallel, that a cushion (54, 55) is arranged at an axial distance on both sides of the sealing diaphragm (59, 60), and that the cushions are each held in the axial and radial direction at the external circumference by the shell and at the internal circumference by a respective pipe end.

8. Connection according to claim 2,
characterised in that
the sealing diaphragm plate (40) comprises an annular diaphragm plate, the internal circumference of which is welded in sealing manner to one of the pipe ends (30), optionally with the interpolation of a cylindrical sleeve (33), that at least one further, flat, substantially radially extending annular sealing diaphragm plate (42) is arranged adjacent to the external circumference of the diaphragm plate in the direction towards the other pipe end (31) in such a manner that it is connected in sealing manner thereto, and that that further sealing diaphragm plate is caught between an annular wall (44), which is connected to the other pipe end (31) and extends substantially radially, and the radial wall (45) of the annular space (32), which wall is arranged opposite the wall (44) in relation to the further sealing diaphragm plate and extends from the other pipe end (31).

9. Connection according to claim 8,
characterised in that
at least one pair of further sealing diaphragm plates (42) is connected to the external circumference, and that at least one additional, substantially radially extending annular sealing diaphragm plate (43) which is secured in sealing manner by way of its internal circumference to the other pipe end (31) engages between that pair radially from inside.

10. Connection according to claim 8 or claim 9,
characterised in that
the gap cross-section between the further sealing diaphragm plate (42) and optionally the additional sealing diaphragm plate (43), on the one hand, and the axially adjoining components (annular wall 44, wall 45), on the other, has at least one widened portion (46).

11. Connection according to any one of claims 8 to 10,
characterised in that
the further sealing diaphragm plate and optionally the additional sealing diaphragm plate are trapped axially between the annular wall (44) and the wall (45).

12. Connection according to claim 1,
characterised in that
the sealing diaphragm plate (96, 107, 108) is arranged on the side of the cushion (95, 105) that is remote from the inside of the pipes.

13. Connection according to claim 12,
characterised in that
the sealing diaphragm plate (96) is welded to the outside (97, 98) of the pipe parts (92, 93) forming the annular space (94).

14. Connection according to claim 12 and claim 13,
characterised in that
the sealing diaphragm plate comprises two identical annular diaphragm parts (107, 108) which are arranged axially next to one another and extend counter to one another in substantially inclined manner with respect to the pipe axis (112), that the diaphragm parts are connected to one another in sealing manner along their external circumference, and that the diaphragm parts, bridging radially at the outside the annular space (104) formed by the pipe ends, are each connected in sealing manner by way of their internal circumference, which has the same diameter, to a respective adjacent pipe end (100, 101).

15. Connection according to claim 14,
characterised in that
the diaphragm parts (107, 108) are connected to one another at the outside with the interpolation of a cylindrical sleeve (111).

## Revendications

1. Raccordement pour deux tuyaux (1, 2, 15, 16, 30, 31, 50, 51, 72, 73, 90, 91, 100, 101) d'un conduit pour milieu chaud, plus particulièrement d'un conduit de gaz d'échappement pour véhicules automobiles, les deux extrémités des tuyaux juxtaposés constituant un espace annulaire (3, 17, 32, 57, 58, 74, 94, 104) reliant les deux extrémités au moins partiellement, cet espace comprenant au moins un coussin annulaire fabriqué en une matière céramique ou métallique résistant à la température et à la corrosion sous la forme d'une nappe, d'un treillis, d'un tissu ou d'un tricot de fibres ou de fils de fer ou similaire (4, 18, 35, 54, 55, 75, 76, 95, 105), ce coussin étant serré dans l'espace annulaire et présentant des caractéristiques de faible amortissement dans les sens radial et axial, assurant ainsi une liaison mobile des extrémités des tuyaux dans une plage limitée en s'y appuyant dans les sens radial et axial, le coussin (4, 18, 35, 54, 55, 75, 76, 95, 105) étant complété par au moins un diaphragme d'étanchéité circulaire fabriqué en une matière résistant à la température et à la corrosion et orienté dans le sens sensiblement radial reliant les deux extrémités des tuyaux (8, 19, 20, 40, 59, 60, 77, 96, 107, 108) de manière étanche, disposé dans le sens sensiblement coaxial par rapport à la position radiale du coussin (4, 18, 35, 54, 55, 75, 76, 95, 105) et présentant un profil d'ondulations, de graduations ou de bossages concentriques, **caractérisé en ce que** le diaphragme d'étanchéité (8, 19, 20, 40, 59, 60, 77, 96, 107, 108) est disposé avec un écartement axial par rapport au coussin (4, 18, 35, 54, 55, 75, 76, 95, 105).

2. Raccordement selon la revendication 1, caractérisé en ce que le diaphragme d'étanchéité (8, 19, 20, 40, 59, 60, 77) est disposé du côté du coussin (4, 18, 35, 54, 55, 75, 76) orienté vers l'intérieur du tuyau.

3. Raccordement selon la revendication 2, caractérisé en ce que le diaphragme d'étanchéité (8, 17) est soudé sur les éléments de tuyau (6, 7 ; 78, 79) constituant l'espace annulaire (3, 74).

4. Raccordement selon la revendication 2, caractérisé en ce que le diaphragme d'étanchéité se compose de deux disques de' diaphragme circulaires (19, 20, 59, 60) disposés dans le sens axial l'un à côté de l'autre, (21, 61) et en ce que ces deux disques de diaphragme sont soudés entre eux au niveau de leur circonférence externe (21,61) et qu'ils sont reliés de manière étanche à l'extrémité du tuyau voisin (23, 24 ; 64, 65) au niveau de leur circonférence interne.

5. Raccordement selon la revendication 4, caractérisé en ce que la liaison entre les disques de diaphragme (19, 20, 59, 60) et les extrémités des tuyaux (15, 16, 52, 53) est réalisée par des traverses (22, 23, 62, 63) partant des extrémités des tuyaux et reliées de manière solidaire et étanche à ces dernières sous la forme d'éléments tubulaires courts.

6. Raccordement selon l'une quelconque des revendications précédentes, caractérisé en ce qu'un autre coussin (76) est disposé du côté du diaphragme d'étanchéité (77) orienté vers la face interne du tuyau.

7. Raccordement selon la revendication 4 ou 5, caractérisé en ce que l'espace annulaire (57) est constitué par une gorge (56) fabriquée en une matière résistant à la température et à la corrosion, disposée de manière sensiblement parallèle au sens axial des tuyaux, contournant et recouvrant les extrémités (52, 53) des tuyaux à une certaine distance de ces derniers, en ce qu'un coussin (54, 55) est disposé sur un certain écartement dans le sens axial des deux côtés du diaphragme d'étanchéité (59, 60) et en ce que les coussins sont maintenus, dans les sens axial et radial, au niveau de leur circonférence externe, par la gorge et, au niveau de leur circonférence interne, par l'une des extrémités des tuyaux.

8. Raccordement selon la revendication 2, caractérisé en ce que le diaphragme d'étanchéité (40) est réalisé sous la forme d'un disque circulaire dont la circonférence interne est soudée de manière étanche, éventuellement par l'intermédiaire d'une douille cylindrique (33), sur l'une des extrémités des tuyaux (30), en ce qu'un deuxième diaphragme d'étanchéité (42) annulaire relié de manière étanche à la circonférence externe du diaphragme est rajouté en direction de l'extrémité de l'autre tuyau (31) et en ce que ce deuxième diaphragme d'étanchéité est logé entre une paroi annulaire (44) reliée à l'extrémité de l'autre tuyau (31) et orientée dans le sens essentiellement radial, d'une part, et une paroi (45) radiale de l'espace annulaire (32) située en face du deuxième diaphragme d'étanchéité, d'autre part.

9. Raccordement selon la revendication 8, caractérisé en ce qu'une deuxième paire de diaphragmes d'étanchéité (42) est reliée à la circonférence externe et en ce qu'au moins un diaphragme d'étanchéité (43) annulaire supplémentaire est monté à l'intérieur dans le sens radial, sa circonférence intérieure étant appuyée de manière étanche contre l'extrémité de l'autre tuyau (31).

10. Raccordement selon la revendication 8 ou 9, caractérisé en ce que la section de la fente entre le deuxième diaphragme d'étanchéité (42) et l'éventuel diaphragme d'étanchéité supplémentaire (43), d'une part, et les éléments juxtaposés dans le sens axial (paroi annulaire 44, paroi 45), d'autre part, présente un bossage (46).

11. Raccordement selon l'une quelconque des revendications 8 à 10, caractérisé en ce que le deuxième diaphragme d'étanchéité et éventuellement le diaphragme d'étanchéité supplémentaire sont serrés dans le sens axial entre la paroi annulaire (44) et la paroi (45).

12. Raccordement selon la revendication 1, caractérisé en ce que le diaphragme d'étanchéité (96, 107, 108) est disposé du côté du coussin (95, 105) opposé au tuyau.

13. Raccordement selon la revendication 12, caractérisé en ce que le diaphragme d'étanchéité (96) est soudé sur la face externe des éléments de tuyau (92, 93) constituant l'espace annulaire (94).

14. Raccordement selon les revendications 12 et 13, caractérisé en ce que le diaphragme d'étanchéité se compose de deux parties de diaphragme circulaire (107, 108) identiques, disposées l'une en face de l'autre dans le sens axial et sensiblement inclinées par rapport à l'axe du tuyau (112), en ce que les éléments de diaphragme sont reliés de manière étanche entre eux le long de leur circonférence externe et en ce qu'ils sont reliés de manière étanche à l'une des extrémités des tuyaux (100, 101,) adjacents au niveau de leurs circonférences internes de même diamètre en formant, dans le sens radial et à l'extérieur, un pont au-dessus de l'espace annulaire (104) constitué par les extrémités des tuyaux.

15. Raccordement selon la revendication 14, caractérisé en ce que les éléments de diaphragme (107, 108) sont reliés entre eux à la face extérieure en intercalant une douille cylindrique (111).
